# EUROPÄISCHE PATENTSCHRIFT

(11) **EP 2 534 759 B1**
(45) Veröffentlichungstag und Bekanntmachung des Hinweises auf die Patenterteilung: **13.11.2013**
(21) Anmeldenummer: 11703616.0
(22) Anmeldetag: 11.02.2011
(51) Int. Cl.: H01Q 1/38, H01Q 1/52, H01Q 7/00, H01Q 21/28, H01Q 1/24, H01Q 1/32, H04B 1/38, B60R 11/02

(54) **ANORDNUNG ZUR ANKOPPLUNG EINES MOBILTELEFONS AN EINE EXTERNE ANTENNE**
ARRANGEMENT FOR COUPLING A MOBILE PHONE TO AN EXTERNAL ANTENNA
SYSTÈME DE COUPLAGE D'UN TÉLÉPHONE MOBILE À UNE ANTENNE EXTERNE

(30) Priorität: 13.02.2010 DE 102010008030
(43) Veröffentlichungstag der Anmeldung: 19.12.2012
(73) Patentinhaber: Peiker acustic GmbH & Co. KG, 61381 Friedrichsdorf (DE)
(72) Erfinder: PEIKER, Andreas, 61381 Friedrichsdorf (DE)
(74) Vertreter: Otten, Herbert
(86) Internationale Anmeldenummer: PCT/EP2011/000656
(87) Internationale Veröffentlichungsnummer: WO 2011/098288

(56) Entgegenhaltungen:
- EP-A1- 1 489 682
- WO-A2-2004/095634
- WO-A2-2008/085503
- DE-A1-102006 034 128
- DE-A1-102007 044 294
- GB-A- 2 407 448
- US-A1- 2004 202 312

## Beschreibung

Die Erfindung betrifft eine Anordnung zur verlust- und störstrahlungsarmen Ankopplung einer als Sende und/oder Empfangsantenne ausgebildeten Antenne eines Mobiltelefons an eine externe Antenne bzw. eine Anordnung zur Aufnahme eines Mobiltelefons aus einer Vielzahl unterschiedlicher Mobiltelefone in einem Fahrzeug und zur Ankopplung des jeweiligen Mobiltelefons an Einrichtungen des Fahrzeugs entsprechend den Oberbegriffen des Anspruchs 1.

In der WO 2007/118694 A1 wird zwar eine spezielle Antennenordnung beschrieben, die die Ankopplung an eine Sende-/Empfangsantenne eines Mobiltelefons in einem Aufnahmeraum zulässt, eine spezielle Halterung für das Mobiltelefon ist aber notwendig, um eine effektive Ankopplung an die Antenne des Mobiltelefons zu erreichen. Jedes Mobiltelefon hat eine andere Antennenstruktur und meist auch eine andere Anordnung der Antenne im Gehäuse des Mobiltelefons. Diese spezifischen Unterschiede werden hier ausgeglichen, indem die Halterung verschiedene Positionen ermöglicht, abhängig von den Außenabmessungen des Mobiltelefons und der Antennenanordnung im Mobiltelefon.

In der WO 2004/095634 A2 wird eine Fahrzeughalterung für ein Mobiltelefon beschrieben, die zusätzlich zur Koppelantenne in dieser spezifischen Halterung Elemente zur Reflexion und Dämpfung der HF-Strahlung aufweist, die die Störstrahlung in das Fahrzeug vermeiden sollen. Ähnliches - die Abschirmung des Aufnahmeraumes für das Mobiltelefon im Fahrzeug - ist auch Gegenstand der US 7,110,537 B2.

All diesen Anordnungen ist es gemeinsam, dass eine auf das jeweilige Mobiltelefon abgestimmte Halterung bzw. Aufnahmevorrichtung notwendig ist, um eine optimale Ankopplung der Sende-/Empfangsantenne des Mobiltelefons an die Koppelantenne mit Verbindung zu einer externen Antenne zu erreichen.

Ebenfalls all diesen Anordnungen, sowie den in EP 0 999 607 A2, EP 1 006 606 A1 und EP 1 170 822 A1 beschriebenen Anordnungen, ist es gemeinsam, dass eine flächig ausgebildete Antenne so dicht wie möglich und parallel zur Rückwand des Mobiltelefons angebracht wird, um eine möglichst geringe Koppeldämpfung zu erreichen.

In EP 1 006 606 A1 wird diese Koppelantenne so exakt wie möglich nach der internen Antenne des Mobiltelefons ausgerichtet. EP 1 170 822 A1 beschreibt eine Struktur, die eine Anpassung an die Antenne im Mobiltelefon möglichst breit-bandig zulässt.

Zur Zeit müssen die Mobiltelefone auf unterschiedlichen Frequenzen arbeiten können, um international einsatzfähig zu sein. Zum Beispiel ist es für ein europaweites Telefonieren notwenig, GSM900, GSM1800 und UMTS2100 zu unterstützen, d.h. mit Frequenzen von 900Mhz, 1800MHz und 2100MHz zu arbeiten.

In WO 2007/118694 A1 ist die für den Einbau in ein Fahrzeug vorgesehene Koppelantenne spiralförmig strukturiert, um eine Multiband-Fähigkeit zu erreichen.

Aus der DE 10 2007 044 294 A1 ist weiterhin eine Mobiltelefonaufnahmeanordnung zur Aufnahme eines Mobiltelefons aus einer Vielzahl unterschiedlicher Mobiltelefone in einem Fahrzeug und zur Ankopplung des jeweiligen Mobiltelefons an Einrichtungen des Fahrzeugs, nämlich an eine Außenantenne des Fahrzeugs bekannt, wobei die Anordnung eine erste Antennenstruktur, welche einen Antennenkörper umfasst, zum drahtlosen Übertragen von Signalen zu und von einer als Sende- und Empfangsantenne ausgebildeten Antenne des Mobiltelefons umfasst, wobei die Anordnung einen Behälter mit einen Aufnahmeraum umfasst, welcher räumlich derart bemessen ist, dass Mobiltelefone unterschiedlicher Abmessungen an einer Wandung, nämlich auf einem Boden des Aufnahmeraums anlegbar bzw. ablegbar sind, wobei die erste Antennenstruktur einen Antennenkörper umfasst, welcher eine etwa parallel zu der Oberfläche der Wandung verlaufende Länge aufweist, wobei die erste Antennenstruktur für das Senden und/oder Empfangen auf einer Mobilfunkfrequenz ausgebildet ist und wobei die erste Antennestruktur jenseits, insbesondere unterhalb einer Oberfläche der Wandung des Aufnahmeraums angeordnet ist.

Aufgabe der Erfindung ist es, eine Mobiltelefonaufnahmeanordnung, zur Aufnahme eines Mobiltelefons aus einer Vielzahl unterschiedlicher Mobiltelefone in einem Fahrzeug und zur Ankopplung des jeweiligen Mobiltelefons an eine Antenne des Fahrzeugs vorzuschlagen, durch welche ein Mobiltelefon aus einer Vielzahl unterschiedlicher Mobiltelefone mit geringem antennentechnischem Aufwand effektiv angekoppelt werden kann, ohne dass das Mobiltelefon millimetergenaue auf die Koppelantenne ausgerichtet bzw. zu dieser fixiert sein muss.

Diese Aufgabe wird ausgehend von den Merkmalen des Oberbegriffs des Anspruchs 1 durch die kennzeichnenden Merkmale der Ansprüche 1 gelöst. In den jeweiligen Unteransprüchen sind vorteilhafte und zweckmäßige Weiterbildungen angegeben.

Die hier vorgeschlagene Anordnung mit einem Aufnahmeraum und einer speziellen Antennenstruktur der Koppelantenne lässt eine Ankopplung an die Sende-/Empfangsantenne eines Mobiltelefons unabhängig von der Ausrichtung des in den Aufnahmeraum eingelegten Mobiltelefons zu. Hierdurch entfällt es, dass seitens des Mobiltelefons oder einer Halterung spezifische Vorkehrungen getroffen werden müssen, um eine optimale Ausrichtung der Koppelantenne zur Sende-/Empfangsantenne des Mobiltelefons zu erreichen. Somit erlaubt es die erfindungsgemäße Anordnung ein Mobiltelefon aus einer quasi unbegrenzten Vielzahl von Mobiltelefonen effektiv mittels einer Koppelantenne an eine Fahrzeugaußenantenne anzuschließen.

Das wird erreicht indem wesentliche Teile der Koppelantenne senkrecht zur Oberfläche bzw. Rückwand des Mobiltelefons angeordnet werden und die Antennenstruktur symmetrisch ausgeführt wird. Mit einer solchen symmetrischen Struktur erhält man eine Multiband-fähige Koppelantenne, die geringe Koppeldämpfungen aufweist.

Durch eine dreidimensionale Ausbildung der Anntennstruktur, welche den Raum noch weiter ausfüllt als eine planare Antennenstruktur lässt sich das Koppelergebnis weiter verbessern bzw. noch unabhängiger von der Bauform und der Positionierung der im Mobiltelefon verbauten Antenne machen, da hierdurch auch andersartig ausgerichtete Teile der Koppelantenne zur Kopplung zur Verfügung stehen.

Die Erfindung sieht auch vor, den Aufnahmeraum mit einer weiteren Antennenstruktur für eine drahtlose Energieübertragung zum Laden der Batterie des Mobiltelefons und/oder eine Antenne für die Audio- und Datenübertragung zum Fahrzeug auszustatten, um das Mobiltelefon z.B. im Freisprechmodus zu betreiben. Hierdurch wird eine Kabelanbindung des Mobiltelefons vollständig überflüssig, obwohl das Mobiltelefon mit allen herkömmlichen Komfortmerkmalen, guter Empfang, Laden des Energiespeichers und Freisprechen verwendet wird.

Eine Abschirmung des Aufnahmeraumes und/oder des Raumes um die Antennestruktur kann vorteilhaft sein. Für eine verlustlose Energieübertragung zum Laden der Batterien des Mobiltelefons ist es vorgesehen, diese Abschirmung auf geeignete Weise zu unterbrechen und/oder zu schlitzen, um Wirbelstromverluste zu vermeiden.

Im Sinne der Erfindung wird unter einer symmetrischen Antennenstruktur eine Antennenstruktur verstanden, welche in symmetrischer Anordnung zwei baugleiche Antennenteile aufweist.

Weitere Einzelheiten der Erfindung werden in der Zeichnung anhand von schematisch dargestellten Ausführungsbeispielen beschrieben. Hierbei zeigen:
- Figur 1:: eine erste Antennenstruktur einer erfindungsgemäßen Anordnung 1;
- Figur 2:: die in der Figur 1 gezeigte erste Antennenstruktur mit einer diese umgebenden zweiten Antennenstruktur;
- Figur 3:: die in der Figur 2 gezeigten Antennenstrukturen zusammen mit einem Mobiltelefon;
- Figur 4:: eine Ausführungsvariante zu der in den Figuren 1 bis 3 gezeigten, ersten Antennenstruktur und
- Figur 5 - 8:: eine weitere erfindungsgemäße Anordnung in unterschiedlichen Ansichten

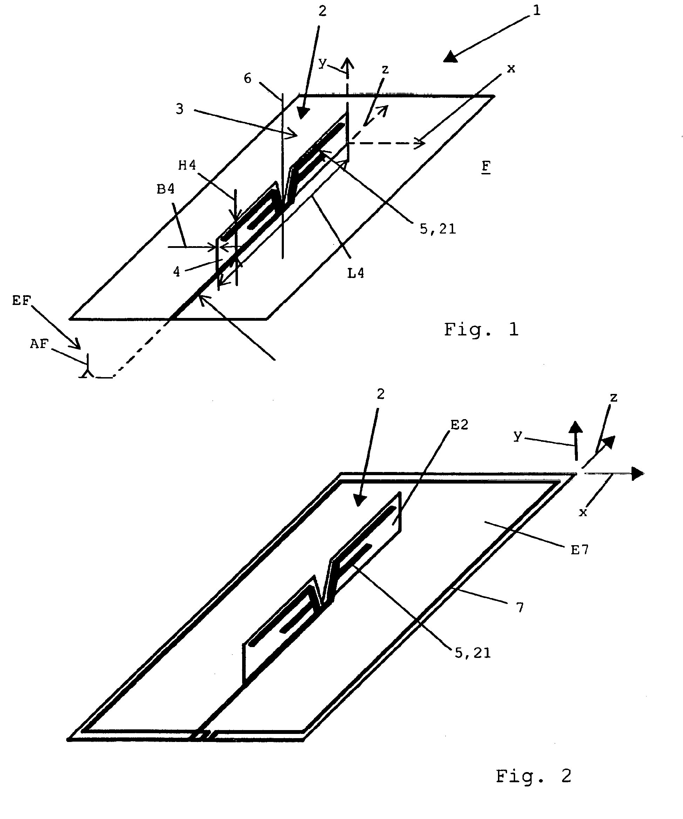

Figur 1 zeigt in schematischer Darstellung eine erste Antennenstruktur 2 einer erfindungsgemäßen Anordnung 1. Die Antennenstruktur 2 ist auf einer Leiterplatte 3 aufgebaut und umfasst einen flachen, stegförmigen Antennenkörper 4. Der Antennenkörper 4 ist symmetrisch ausgebildet und umfasst eine Leiterstruktur 5, welche diesen durchläuft. Die Antennenstruktur 2 bzw. der Antennenkörper 4 mit seiner Leiterstruktur 5 sind zu einer Spiegellinie 6 symmetrisch ausgebildet. Der Antennenkörper 4, welcher die Antennenstruktur 2 im Wesentlichen bildet, weist in x-Richtung eine Breite B4, in y-Richtung einen Höhe H4 und in z-Richtung eine Länge L4 auf. Erfindungsgemäß ist es vorgesehen, die Koppelantenne 2 in einem Fahrzeug F zur Ankopplung eine Mobiltelefons zu verwenden und insbesondere unter Zwischenschaltung einer Signalverarbeitungseinrichtung oder einer Signalbearbeitungseinrichtung und insbesondere einer Verstärkereinrichtung mit einer externen Antenne bzw. Außenantenne AF des Fahrzeugs F zu verbinden. Hierbei wird die Außenantenne AF auch als Einrichtung FE des Fahrzeugs F bezeichnet.

Figur 2 zeigt in schematischer Darstellung die in der Figur 1 gezeigten ersten Antennenstruktur 2 mit einer diese umgebenden zweiten Antennenstruktur 7, welche für eine Energieübertragung zu einem nicht dargestellten Mobiltelefon vorgesehen ist. Die zweite Antennenstruktur 7 umläuft die erste Antennestruktur 2 ringförmig und definiert eine Ebene E7. Die erste Antennenstruktur 2 definiert in z- und y-Richtung eine weitere Ebene E2, wobei die beiden Ebenen E2 und E7 senkrecht zueinander stehen.

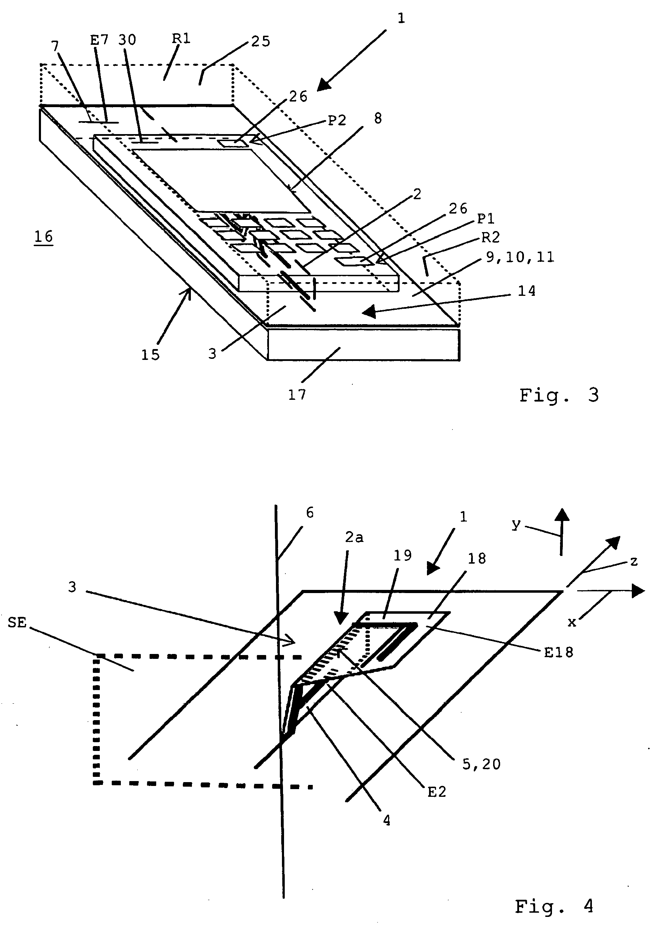

In der Figur 3 sind nun die Antennenstrukturen 2 und 7 der erfindungsgemäßen Anordnung 1 zusammen mit einem Mobiltelefon 8 und einer als Boden 9 ausgeführten Wandung 10 eines nicht weiter dargestellten Behälters 11 schematisch dargestellt. Das Mobiltelefon 8 liegt mit seiner Rückenfläche 12 auf einer Oberfläche 13 des Bodens 9 auf, wobei der Boden 9 bzw. die Oberfläche 13 durchsichtig dargestellt sind. Unterhalb der Oberfläche 13 bzw. unterhalb der Rückenfläche 12 des Mobiltelefons 8 steht die erste symmetrische Antennenstruktur 2 mit ihrer Ebenen E2 senkrecht zu der Oberfläche 13 bzw. der Rückenfläche 12 des Mobiltelefons 8. Durch die symmetrische Ausbildung eine Koppelantenne bildenden ersten Antennenstruktur 2 ist sowohl dann eine breitbandige Ankopplung des Mobiltelefons 8 möglich, wenn eine Antenne 26 in einer mit durchgezogenen Linien angedeuteten Position P1 im Mobiltelefon 8 angeordnet ist, als auch dann wenn die Antenne 26 in einer mit gestrichelten Linien angedeuteten Position P2 in dem Mobiltelefon 8 angeordnet ist. Das heißt, eine breitbandige Ankopplung der Antenne 26 des Mobiltelefons 8 ist unabhängig davon möglich, ob sich die Antenne 26 des Mobiltelefons 1 in einer ersten Raumhälfte R1 oder in einer zweiten Raumhälfte R2 eines über dem Boden 9 liegenden Aufnahmeraums 25 befindet. Somit ist eine breitbandige Ankopplung des Mobiltelefons 8 unabhängig von dessen Ausrichtung in dem Aufnahmeraum 25 und unabhängig von einer Positionierung der Antenne 26 des Mobiltelefons 8 im Mobiltelefon 8 sicher gestellt. Ein unterhalb der Oberfläche 13 liegender Antennenraum 14, in welchem die Antennenstruktur 2 angeordnet ist, ist durch eine Schirmung bzw. einer Abschirmung 15 gegenüber einer Umgebung 16 abgeschirmt. Hierbei bildet die Schirmung 15 um die als Koppelantenne arbeitende Antennenstruktur 2 insbesondere eine Wanne 17. Von der Antennenstruktur 7 ist in der Figur 3 nur ein Ausschnitt gezeigt. Diese verläuft innerhalb der Schirmung 15 - wie aus der Figur 2 bekannt - um die Antennenstruktur 2 herum. Die gedachte Ebene E7, in welcher die Antennenstruktur 7 liegt steht parallel zu der Oberfläche 13 bzw. zu der Rückenfläche 12 des Mobiltelefons 8. Zur Aufnahme der von der zweiten Antennenstruktur 7 abgestrahlten Energie weist das Mobiltelefon 8 eine schematische angedeutete, Energie empfangende Antenne 30 auf.

In der Figur 4 ist schematisch und ausschnittsweise eine Ausführungsvariante einer ersten Antennenstruktur 2a für eine erfindungsgemäße Anordnung 1 gezeigt. Die Antennestruktur 2a ist als dreidimensionale Antennenstruktur ausgeführt und umfasst zusätzlich zu einem flachen, stegförmigen ersten Antennenkörper 4 einen zweiten flügelförmigen Antennenkörper 18. Spiegelbildlich zu einer Spiegellinie 6 ist ein weiterer, nicht dargestellter, dritter Antennenkörper der Antennenstruktur 2a angeordnet. Die beiden zusätzlichen Antennenkörper 18 sind mit dem ersten, stegförmigen Antennenkörper 4 verbunden, welcher sich spiegelbildlich zu der Spiegellinie 6 erstreckt, und bilden Flügel 19, welche mit ihrer Ebene E18 in der xz-Ebene liegen und somit senkrecht zu dem ersten Antennenkörper 4, welcher sich in der yz-Ebene erstreckt, angeordnet sind. Eine sich astförmig verzweigende Leiterstruktur 5 erstreckt sich von der Spiegellinie 6 aus über den ersten Antennenkörper 4 und die flügelförmigen Antennenkörper 18. Die Leiterstruktur 5 bildet bei der Antennestruktur 2 gemäß der Figur 4 eine räumliche bzw. dreidimensionale Leiterstruktur 20. Im Gegensatz hierzu bildet die Leiterstruktur 5 bei der in den Figuren 1 bis 3 gezeigten ersten Ausführungsvariante eines zweiten Antennenkörpers eine Art ebene bzw. planare Leiterstruktur 21. Gemäß einer nicht dargestellten Ausführungsvariante ist der dritte Antennenkörper spiegelbildlich zu einer Spiegelebene SE ausgebildet, welche die durch den ersten Antennenkörper definierte Ebene E2 senkrecht schneidet.

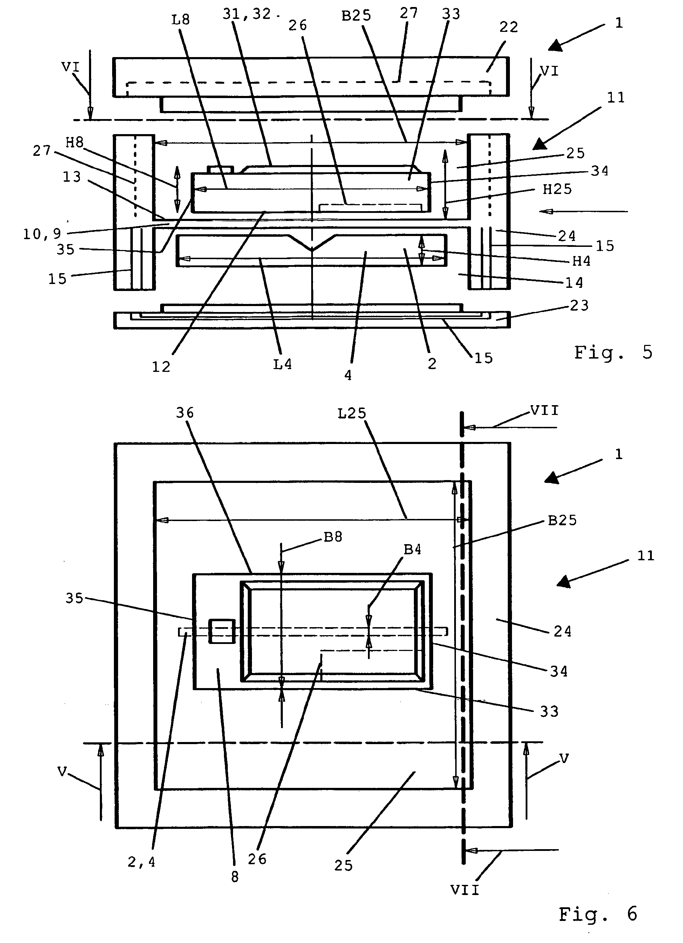

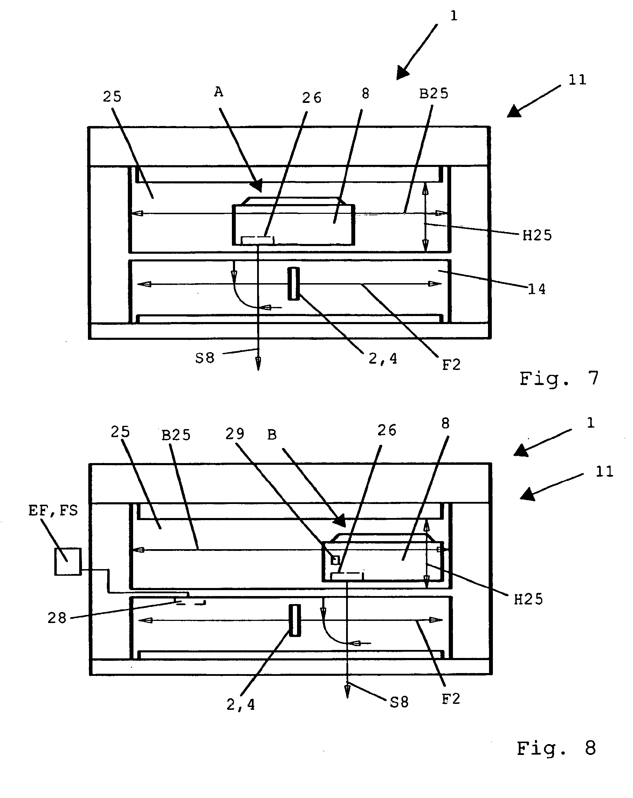

In den Figuren 5 bis 8 ist eine weitere erfindungsgemäße Anordnung 1 in unterschiedlichen Ansichten schematisch dargestellt. In der Figur 5 ist ein Schnitt entsprechend der in der Figur 6 gezeigten Schnittlinie V-V durch einen Behälter 11 gezeigt. Hierbei wurde in der Figur 5 sowie auch in den Figuren 6 bis 8 auf die Schraffur geschnittener Flächen verzichtet, um die Darstellungen übersichtlicher zu halten. Ergänzend sind in der Figur 5 noch abnehmbare Deckel 22, 23 gezeigt, mit welchen ein Korpus 24 des Behälters 11 verschließbar ist. Der Korpus 24 und die Deckel 22 und 23 bilden den Behälter 11. Der Behälter 11 umfasst einen Aufnahmeraum 25 für ein Mobiltelefon 8 und einen Antennenraum 14 für eine erste Antennenstruktur 2. In der Figur 7 ist der Behälter 11 mit aufgesetzten Deckeln 22 und 23 gezeigt. In der Figur 4 sind die Deckel 22 und 23 in einer abgehobenen Stellung gezeigt. Zur Ausbildung des Aufnahmeraums 25 und des Antennenraums 14 umfasst der Behälter 11 eine Wandung 10, welche bei der vorliegenden Konstruktion als Boden 9 ausgebildet ist. Das Mobiltelefon 8 liegt mit einer Rückenfläche 12 auf einer Oberfläche 13 des Bodens 9 auf. Ein Abstand zwischen der Rückenfläche 12 und der Oberfläche 13 dient in der schematischen Darstellung nur dazu, dass die Rückenfläche 12 eindeutig bezeichnet werden kann. Bei der Tatsächlichen Ausführungsform liegt das Mobiltelefon 8 auf der Oberfläche 13 auf. Das Mobiltelefon 8 weist neben der Rückenfläche 12 eine dieser gegenüberliegenden Displayfläche 31 bzw. Bedienfläche 32 auf. Weiterhin weist das Mobiltelefon 8 Seitenflächen 33 bis 36 auf, welche zwischen der Rückenfläche 12 und der Displayfläche 31 angeordnet sind. Mit gestrichelten Linien ist eine Antenne 26 des Mobiltelefons 8 angedeutet. Wie aus einer Zusammenschau der Figur 5 und der Figur 6, die einen Schnitt entsprechend der Schnittlinie VI-VI durch die Darstellung der Figur 5 zeigt, hervorgeht, ist das Mobiltelefon 8 mit seiner Rückenfläche 12 auf der Oberfläche 13 des Bodens 9 in dem Aufnahmeraum 25 frei positionierbar, so dass eine Anwender beim Einlegen des Mobiltelefons 8 in den Aufnahmeraum keine Sorgfalt auf die Ausrichtung des Mobiltelefons 8 legen muss. Der Aufnahmeraum 25 weist eine Breite B25, eine Höhe H25 und eine Länge L25 auf. Das Mobiltelefon 8 weist eine Breite B8, einen Höhe H8 und eine Länge L8 auf. Die erste planare Antennenstruktur 2 weist mit einem Antennenkörper 4 eine Breite B4, eine Höhe H4 und eine Länge L4 auf und erstreckt sich mit der Länge L4 über wenigstens 50% der Länge L25 des Aufnahmeraums 25 und vorzugsweise über wenigstens 70% der Länge L25 des Aufnahmeraums. In der Figur 5 ist in Draufsicht erkennbar wie die Antenne 26 des Mobiltelefons 8 und die als Koppelantenne ausgebildete Antennestruktur 2 zueinander positioniert sind. In der Figur 5 ist mit gestrichelten Linien schematische eine Abschirmung 27 des Aufnahmeraums 25 angedeutet, welche das Mobiltelefon 8 wie eine ungekehrte Wanne ummantelt. Weiterhin ist mit einer Doppellinie 15 eine Schirmung 15 des Antennenraums 14 schematisch angedeutet. Diese ummantelt den Antennenraum 14 wie eine Wanne.

Die Figur 7 zeigt dann eine Schnittansicht durch die Darstellung der Figur 6 entsprechend der dort gezeigten Schnittlinie VII-VII. Aus dieser Ansicht ist in vereinfachter, schematischer und idealisierter Darstellung erkennbar wie die Antenne 26 des Mobiltelefons 8 in eine Pfeilrichtung S8 abstrahlt und der Pfeil S8 eine Feld F2, welches die Antennenstruktur 2 um sich herum in dem Antennenraum 14 aufbaut rechtwinklig schneidet. Messungen haben gezeigt, dass sich durch eine derartige räumliche Ausrichtung von Mobiltelefon und planarer, symmetrischer Koppelantenne eine gute Ankopplung erzielen lässt, welche weitgehend unabhängig von der exakten Ausrichtung des Mobiltelefons 8 in dem Aufnahmeraum 25 ist, so dass das Mobiltelefon 8 beispielsweise auch aus einer ersten Position A, welche dieses in der Darstellung der Figur 7 einnimmt, in einen zweite Position B, welche in der Figur 8 gezeigt ist, verschoben werden kann, ohne dass eine signifikante Veränderung der Qualität der Koppelung gemessen wird. Auch für unterschiedliche Mobiltelefone konnte mit Messungen eine von der Orientierung des Mobiltelefons unabhängige Qualität der Koppelung ermittelt werden. In der Figur 8 ist exemplarisch noch eine zusätzliche, dritte Antennestruktur 28 der Anordnung 1 gezeigt, welche an eine Einrichtung EF des Fahrzeugs angeschlossen ist, die beispielsweise als Freisprecheinrichtung FS ausgebildet ist. Zischen der dritten Antennenstruktur 28 und Antenne 29 des Mobiltelefons 8 erfolgt eine Übertragung von Daten- und/oder Audiosignalen zum Beispiel zur Nutzung der Freisprecheinrichtung oder zur Nutzung eines im Fahrzeug angeordneten Displays oder zum Empfang von im Fahrzeug erzeugten Steuersignalen.

Selbstverständlich sieht die Erfindung auch vor, den Aufnahmeraum schräg oder hochkant anzuordnen. Auch eine Überkopfanordnung z.B. für den Einsatz in Flugzeugen ist erfindungsgemäß vorgesehen.

Die Erfindung ist nicht auf dargestellte oder beschriebene Ausführungsbeispiele beschränkt. Sie umfasst vielmehr Weiterbildungen der Erfindung im Rahmen der Schutzrechtsansprüche.

### Bezugszeichenliste:

- 1: Anordnung
- 2, 2a: erste Antennenstruktur (als Koppelantenne für Mobilfunk)
- 3: Leiterplatte
- 4: Antennenkörper von 2
- 5: Leiterstruktur in 4
- 6: Spiegellinie
- 7: zweite Antennenstruktur (für Energieübertragung)
- 8: Mobiltelefon
- 9: Boden
- 10: Wandung
- 11: Behälter
- 12: Rückenfläche von 8
- 13: Oberfläche von 9 bzw. 10
- 14: Antennenraum
- 15: Schirmung
- 16: Umgebung
- 17: Wanne
- 18: zweiter Antennenkörper von 2
- 19: Flügel
- 20: räumliche Leiterstruktur
- 21: ebene bzw. planare Leiterstruktur
- 22: Deckel von 11
- 23: Deckel von 11
- 24: Korpus von 11
- 25: Aufnahmeraum für 8
- 26: Antenne von 8
- 27: Abschirmung des Aufnahmeraums 25
- 28: dritte Antennenstruktur von 1 zur Übertragung von Daten- und Audiosignalen
- 29: weitere Antenne von 8 zur Übertragung von Daten- und Audiosignalen
- 30: Energie empfangende Antenne von 8
- 31: Displayfläche von 8
- 32: Bedienfläche von 8
- 33 - 36: Seitenfläche von 8
- 37: im Querschnitt L-förmiger Körper
- AF: externe Antenne bzw. Außenantenne eines Fahrzeugs
- S8: Abstrahlrichtung von 26 von 8
- E2: Ebene definiert durch 2
- E7: Ebene definiert durch 7
- E18: Ebene definiert durch 18
- EF: Einrichtung des Fahrzeugs
- F: Fahrzeug
- F2: Feld von 2 bzw. 4
- FS: Freisprecheinrichtung
- P1, P2: Position von 26 in 8
- R1, R2: Raumhälfte von 25
- SE: Spiegelebene
- B4: Breite von 4
- H4: Höhe von 4
- L4: Länge von 4
- x, y, z: Raumrichtung

## Patentansprüche

1. Anordnung (1), nämlich Mobiltelefonaufnahmeanordnung, zur Aufnahme eines Mobiltelefons (8) aus einer Vielzahl unterschiedlicher Mobiltelefone in einem Fahrzeug (F) und zur Ankopplung des jeweiligen Mobiltelefons (8) an Einrichtungen (EF) des Fahrzeugs (F), nämlich an eine Außenantenne (AF) des Fahrzeugs (F), wobei die Anordnung (1) eine erste Antennenstruktur (2), welche einen Antennenkörper (4) umfasst, zum drahtlosen Übertragen von Signalen zu und von einer als Sende- und Empfangsantenne ausgebildeten Antenne (26) des Mobiltelefons (8) umfasst, wobei die Anordnung (1) einen Behälter (11) mit einen Aufnahmeraum (25) umfasst, welcher räumlich derart bemessen ist, dass Mobiltelefone (8) unterschiedlicher Abmessungen an einer Wandung (10), nämlich auf einem Boden (9) des Aufnahmeraums (25) anlegbar bzw. ablegbar sind, wobei die erste Antennenstruktur (2) einen Antennenkörper (4) umfasst, welcher eine etwa parallel zu der Oberfläche (13) der Wandung (10) verlaufende Länge (L4) aufweist, wobei die erste Antennenstruktur (2) für das Senden und/oder Empfangen auf einer Mobilfunkfrequenz ausgebildet ist und wobei die erste Antennestruktur (2) jenseits, nämlich unterhalb einer Oberfläche (13) der Wandung (10) des Aufnahmeraums (25) angeordnet ist, **dadurch gekennzeichnet, dass** die erste Antennenstruktur (2) einen stegartigen Antennenkörper (4) umfasst, welcher eine ebenfalls parallel zu der Oberfläche (13) der Wandung (10) verlaufende Breite (B4) aufweist und welcher eine senkrecht zu der Oberfläche (13) der Wandung (10) stehende Höhe (H4) aufweist, wobei die Höhe (H4) des stegartigen Körpers (4) der Antennenstruktur (2) ein Vielfaches der Breite (B4) des stegartigen Körpers (4) der Antennenstruktur (2) beträgt und dass die Länge (L4) des stegartigen Körpers (4) der Antennenstruktur (2) ein Vielfaches der Höhe (H4) des stegartigen Körpers (4) der Antennenstruktur (2) beträgt, wobei die erste Antennenstruktur (2) in Bezug auf den ersten Antennenkörper (4) symmetrisch ausgebildet ist und eine Leiterstruktur umfasst, welche diesen durchläuft, wobei die Symmetrie in Bezug auf eine Spiegellinie (6) oder eine Spiegelebene (SE) betrachtet wird, welche senkrecht auf der Wandung (10) steht, an welcher das Mobiltelefon (8) anliegt bzw. aufliegt, und die erste Antennenstruktur (2) in Bezug auf deren Länge (L4) und Breite (B4) mittig schneidet.

2. Anordnung (1) nach Anspruch 1,
**dadurch gekennzeichnet, dass** die Anordnung (1) eine zweite Antennenstruktur (7) umfasst, wobei die zweite Antennenstruktur (7) für das Senden im Nahfeld ausgelegt ist und derart angeordnet ist, dass das Einhalten eines von der Sendefrequenz abhängigen Maximalabstands zu dem Mobiltelefon (8) und einer die Energie empfangenden Antenne (30) des Mobiltelefons (8) eingehalten ist.

3. Anordnung nach Anspruch 1 oder 2, **dadurch gekennzeichnet, dass** der stegartige Antennenkörper (4) der ersten Antennenstruktur (2) unter Vermeidung einer parallelen Ausrichtung zu der Antenne (26) des Mobiltelefons (8) und unter Vermeidung einer Anpassung an Lage, Ausrichtung und Struktur der Antenne (26) des Mobiltelefons (8) senkrecht jenseits bzw. unterhalb der Oberfläche (13) der Wandung (10) des Aufnahmeraums (25) bzw. senkrecht gegenüber bzw. unter einem in dem Aufnahmeraum (25) befindlichen Mobiltelefon (8) steht, wobei der stegartige Antennenkörper (4) senkrecht zu einer Antenne (26) des Mobiltelefons (8) ausgerichtet ist, wobei die Antenne (26) des Mobiltelefons (8) und der flache Antennenkörper (4) derart angeordnet ist, dass ein entsprechender Mindestabstand und ein entsprechender Maximalabstand zwischen diesen gewährleistet ist.

4. Anordnung nach Anspruch 1, 2, 3 **dadurch gekennzeichnet, dass** der Aufnahmeraum (25) mit seinen Abmessungen (H25, B25, L25), nämlich mit seiner Länge (L25), Breite (B25) und Höhe (H25) jedes Mobiltelefon (8) derart übertrifft, dass dieses
- bei auf der Oberfläche (13) der Wandung (10) des Aufnahmeraums (25) anliegender bzw. aufliegender Rückenfläche (12) oder
- bei auf der Oberfläche (13) der Wandung (10) des Aufnahmeraums (25) anliegender bzw. aufliegender Displayfläche (31) oder Bedienfläche (32) oder
- bei auf der Oberfläche (13) der Wandung (10) des Aufnahmeraums (25) anliegender bzw. aufliegender Seitenfläche (33 - 35)
in beliebiger Orientierung in den Aufnahmeraum (25) einlegbar ist.

5. Anordnung nach einem der vorhergehenden Ansprüche 1, 3, oder 4, **dadurch gekennzeichnet, dass** die Anordnung (1) eine zweite Antennestruktur (7) umfasst, welche insbesondere benachbarte Wandungen (10) des Behälters (11) durchläuft und welche insbesondere den Aufnahmraum (25) umläuft, wobei mit der zweiten Antennenstruktur (7) Energie von dem Fahrzeug (F) auf das Mobiltelefon (8) übertragbar ist, wobei die Energieübertragung induktiv im Nahfeld erfolgt, wobei eine von der zweiten Antennenstruktur (7) definierte, gedachte Ebene (E7) parallel zu der Rückenfläche (12) des in dem Aufnahmeraum (25) befindlichen Mobiltelefons (8) ausgerichtet ist.

6. Anordnung nach einem der vorhergehenden Ansprüche 1, 2, 3, 4, oder 5, **dadurch gekennzeichnet, dass** sich die Antenne (26) des Mobiletelefons (8) und der flache Antennenkörper (4) der ersten Antennenstruktur (2) in Bezug auf die Wellenlänge der übertragenen Wellen
- in einem Nahfeld oder
- in einem Nahfeld und in einem Grenzbereich zwischen einem Nahfeld und einem Fernfeld oder
- in einem Grenzbereich zwischen einem Nahfeld und einem Fernfeld oder
- in einem Grenzbereich zwischen einem Nahfeld und einem Fernfeld und in dem Fernfeld
befinden.

7. Anordnung nach einem der vorhergehenden Ansprüche 1, 2, 3, 4 5, oder 6, **dadurch gekennzeichnet, dass** die erste Antennenstruktur (2) neben dem ersten flachen, stegförmigen Antennenkörper (4) wenigstens einen zweiten Antennenkörper (18) umfasst, welcher an dem ersten Antennenkörper (4) einen Flügel (19) bildet, welcher sich parallel zu der Oberfläche (13) der Wandung (10) erstreckt, wobei die Antennenkörper (2, 4) eine Leiterstruktur (20) umfassen, welche die Antennenkörper (2, 4) durchläuft, und wobei der erste und der zweite Antennenkörper (2, 4) einen im Querschnitt L-förmigen Körper (37) bilden.

8. Anordnung nach einem der vorhergehenden Ansprüche 1 bis 7 **dadurch gekennzeichnet, dass** die erste Antennenstruktur (2) in Bezug auf alle Antennenkörper (4, 18) symmetrisch ausgebildet ist, wobei die Symmetrie in Bezug auf eine Spiegellinie (6) oder eine Spiegelebene (SE) betrachtet wird, welche senkrecht auf der Wandung (10) steht, an welcher das Mobiltelefon (8) anliegt bzw. aufliegt, und die erste Antennenstruktur (2) in Bezug auf deren Länge (L4) und Breite (B4) mittig schneidet.

9. Anordnung nach einem der vorhergehenden Ansprüche 1 bis 8, **dadurch gekennzeichnet, dass** die Anordnung (1) eine dritte Antennenstruktur (28) zur drahtlosen Übertragung, von Daten und/oder Audiosignalen umfasst, welche nach einem Standard für Kurzstreckenfunk betreibbar ist und insbesondere als BlueTooth-Verbindung und/oder BluetoothLowEnergy-Verbindung und/oder InfraRed-Verbindung ausgebildet ist.

10. Anordnung nach einem der vorhergehenden Ansprüche 1 bis 9, **dadurch gekennzeichnet, dass** die erste Antennenstruktur wenigstens einen weiteren Antennenkörper (18) umfasst, welcher rechtwinklig zu dem ersten Antennekörper (4) angeordnet ist und mit diesem eine dreidimensionale Antennestruktur (2a) bildet, wobei der weitere Antennenkörper (18) eine Ebene (E18) definiert, welche parallel zu dem Boden (9) des Aufnahmeraums (25) ausgerichtet ist.

## Claims

1. An assembly (1), in particular a mobile phone receiving assembly, for receiving a mobile phone (8) from a plurality of different mobile phones in a vehicle (F), and for coupling the respective mobile phone (8) with equipment (EF) of the vehicle (F), namely an external antenna (AF) of the vehicle (F), said assembly (1) comprising a first antenna structure (2) having an antenna body (4) for wireless transmission of signals to and from an antenna (26) made as a transmitting and receiving antenna of the mobile phone (8), said assembly (1) comprising a receptacle (11) having a receiving space (25) spatially dimensioned so that mobile phones (8) of different dimensions can be applied or placed against a wall (10), namely a bottom (9) of the receiving space (25), wherein the first antenna structure (2) comprises an antenna body (4) having a length (L4) extending approximately in parallel to the surface (13) of the wall (10), with the first antenna structure (2) being made for transmitting and/or receiving on a mobile communications frequency and, wherein the first antenna structure (2) is arranged beyond, namely below a surface (13) of the wall (10) of the receiving space (25), **characterized in that** the first antenna structure (2) comprises a ridge-like antenna body (4) having a width (B4) also extending in parallel to the surface (13) of the wall (10), and having a height (H4) orthogonal to the surface (13) of the wall (10), the height (H4) of the ridge-like body (4) of the antenna structure (2) being a multiple of the width (B4) of the ridge-like body (4) of the antenna structure (2), and **in that** the length (L4) of the ridge-like body (4) of the antenna structure (2) is a multiple of the height (H4) of the ridge-like body (4) of the antenna structure (2), wherein the first antenna structure (2) is made symmetrically with respect to the first antenna body (4) and comprises a conductive structure going therethrough, wherein the symmetry is observed with respect to a mirror line (6) or a mirror plane (SE) orthogonal to the wall (10) against which the mobile phone (8) is applied or placed, and centrally intersects the first antenna structure (2) with respect to the length (L4) and width (B4) thereof.

2. The assembly (1) according to claim 1, **characterized in that** said assembly (1) comprises a second antenna structure (7), said second antenna structure (7) being designed for near-field transmission and arranged so that a maximum distance, depending on the transmitter frequency, from the mobile phone (8) and a power receiving antenna (30) of the mobile phone (8) is maintained.

3. The assembly according to claim 1 or 2, **characterized in that** the ridge-like antenna body (4) of the first antenna structure (2), while avoiding a parallel alignment to the antenna (26) of the mobile phone (8) and avoiding any adjustment of position, alignment, and structure of the antenna (26) of the mobile phone (8), is vertical beyond or below the surface (13) of the wall (10) of the receiving space (25) or vertical opposite or under a mobile phone (8) located inside the receiving space (25), wherein the ridge-like antenna body (4) is aligned vertically to an antenna (26) of the mobile phone (8), with the antenna (26) of the mobile phone (8) and the flat antenna body (4) being arranged so as to ensure a corresponding minimum distance and corresponding maximum distance therebetween.

4. The assembly according to claim 1, 2, 3, **characterized in that** the receiving space (25) by the dimensions (H25, B25, L25) thereof, namely the length (L25), the width (B25), and the height (H25) thereof, exceeds each mobile phone (8) so that said mobile phone can be placed into the receiving space (25) in any orientation
- when the rear face (12) is applied to or placed on the surface (13) of the wall (10) of the receiving space (25), or
- when the display surface (31) or operating surface (32) is applied to or placed on the surface (13) of the wall (10) of the receiving space (25), or
- when the side face (33-35) is applied to or placed on the surface (13) of the wall (10) of the receiving space (25).

5. The assembly according to any of the preceding claims 1, 3, or 4, **characterized in that** the assembly (1) comprises a second antenna structure (7), in particular going through adjacent walls (10) of the receptacle (11), and in particular going around the receiving space (25), wherein the second antenna structure (7) can transmit power from the vehicle (F) to the mobile phone (8), with power transmission occurring by near-field induction, wherein an imaginary plane (E7) defined by the second antenna structure (7) is aligned in parallel to the rear face (12) of the mobile phone (8) located within the receiving space (25).

6. The assembly according to any of the preceding claims 1, 2, 3, 4, or 5, **characterized in that** the antenna (26) of the mobile phone (8) and the flat antenna body (4) of the first antenna structure (2) with respect to the wavelength of the transmitted waves are located
- in a near field, or
- in a near field and in a fringe range between a near field and a far field, or
- in a fringe range between a near field and a far field, or
- in a fringe range between a near field and a far field and in the far field.

7. The assembly according to any of the preceding claims 1, 2, 3, 4, 5, or 6, **characterized in that**, in addition to the first flat, ridge-like antenna body (4), the first antenna structure (2) comprises at least one second antenna body (18) forming a wing (19) on the first antenna body (4), extending in parallel to the surface (13) of the wall (10), wherein the antenna bodies (2, 4) comprise a conductive structure (20) going through the antenna bodies (2, 4), and wherein the first and the second antenna bodies (2, 4) form a body (37) which is L-shaped in cross section.

8. The assembly according to any of the preceding claims 1 to 7, **characterized in that** the first antenna structure (2) is made symmetrically with respect to all antenna bodies (4, 18), wherein the symmetry is observed with respect to a mirror line (6) or a mirror plane (SE) orthogonal to the wall (10) against which the mobile phone (8) is applied or placed, and centrally intersecting the first antenna structure (2) with respect to the length (L4) and width (B4) thereof.

9. The assembly according to any of the preceding claims 1 to 8, **characterized in that** the assembly (1) comprises a third antenna structure (28) for wireless transmission of data and/or audio signals, operable according to a standard for short range radio and made in particular as a BlueTooth connection and/or a BlueTooth Low Energy connection and/or an infrared connection.

10. The assembly according to any of the preceding claims 1 to 9, **characterized in that** the first antenna structure comprises at least one additional antenna body (18) arranged perpendicularly to the first antenna body (4) and forming a three-dimensional antenna structure (2a) therewith, wherein the additional antenna body (18) defines a plane (E18) aligned in parallel to the bottom (9) of the receiving space (25).

## Revendications

1. Agencement (1), à savoir agencement de réception de téléphone mobile, destiné à recevoir un téléphone mobile (8) parmi une pluralité de téléphones mobiles différents dans un véhicule automobile (F) et à connecter le téléphone mobile (8) concerné à des installations (EF) du véhicule automobile (F), à savoir à une antenne extérieure (AF) du véhicule automobile (F), étant entendu que l'agencement (1) comprend une première structure d'antenne (2), qui comprend un corps d'antenne (4), destinée à la transmission sans fil de signaux vers et depuis une antenne (26) du téléphone mobile (8) réalisée en tant qu'antenne d'émission et de réception, étant entendu que l'agencement (1) comprend un conteneur (11) ayant un espace de logement (25) dont les dimensions sont calculées de telle sorte que des téléphones mobiles (8) de différentes dimensions peuvent être posés sur une paroi (10), à savoir sur un fond (9) de l'espace de logement (25), étant entendu que la première structure d'antenne (2) comprend un corps d'antenne (4) qui présente une longueur (L4) s'étendant sensiblement parallèlement à la surface (13) de la paroi (10), étant entendu que la première structure d'antenne (2) est conçue pour l'émission et/ou la réception sur une fréquence de communication mobile et étant entendu que la première structure d'antenne (2) est agencée de l'autre côté, à savoir en dessous d'une surface (13) de la paroi (10) de l'espace de logement (25), **caractérisé en ce que** la première structure d'antenne (2) comprend un corps d'antenne (4) ressemblant à une tige, qui présente une largeur (B4) s'étendant également parallèlement à la surface (13) de la paroi (10) et qui présente une hauteur (H4) s'étendant perpendiculairement à la surface (13) de la paroi (10), étant entendu que la hauteur (H4) du corps ressemblant à une tige (4) de la structure d'antenne (2) est un multiple de la largeur (B4) du corps ressemblant à une tige (4) de la structure d'antenne (2) et que la longueur (L4) du corps ressemblant à une tige (4) de la structure d'antenne (2) est un multiple de la hauteur (H4) du corps ressemblant à une tige (4) de la structure d'antenne (2), étant entendu que la première structure d'antenne (2) est réalisée symétriquement par rapport au premier corps d'antenne (4) et comprend une structure conductrice qui la traverse, étant entendu que la symétrie est considérée par rapport à une ligne de miroir (6) ou à un plan de miroir (SE) qui s'étend perpendiculairement à la paroi (10) sur laquelle le téléphone mobile (8) repose et que la première structure d'antenne (2) coupe au milieu par rapport à sa longueur (L4) et à sa largeur (B4).

2. Agencement (1) selon la revendication 1, **caractérisé en ce que** l'agencement (1) comprend une deuxième structure d'antenne (7), étant entendu que la deuxième structure d'antenne (7) est conçue pour l'émission dans le champ proche et agencée de telle sorte que le respect d'une distance maximale, qui dépend de la fréquence d'émission, par rapport au téléphone mobile (8) et à une antenne (30) du téléphone mobile (8) recevant l'énergie est assuré.

3. Agencement selon la revendication 1 ou 2, **caractérisé en ce que** le corps d'antenne ressemblant à une tige (4) de la première structure d'antenne (2) est situé perpendiculairement de l'autre côté ou en dessous de la surface (13) de la paroi (10) de l'espace de logement (25) ou perpendiculairement en face ou en dessous d'un téléphone mobile (8) se trouvant dans l'espace de logement (25), en évitant une orientation parallèle par rapport à l'antenne (26) du téléphone mobile (8) et en évitant une adaptation à la position, l'orientation et la structure de l'antenne (26) du téléphone mobile (8), étant entendu que le corps d'antenne ressemblant à une tige (4) est dirigé perpendiculairement à une antenne (26) du téléphone mobile (8), étant entendu que l'antenne (26) du téléphone mobile (8) et le corps d'antenne plat (4) sont agencés de telle sorte qu'une distance minimale correspondante et une distance maximale correspondante est assurée entre eux.

4. Agencement selon la revendication 1, 2 ou 3, **caractérisé en ce que** l'espace de logement (25) dépasse chaque téléphone mobile (8) dans ses dimensions (H25, B25, L25), à savoir dans sa longueur (L25), sa largeur (B25) et sa hauteur (H25), de telle sorte que le téléphone mobile (8) peut être déposé dans n'importe quelle orientation dans l'espace de logement (25) :
- avec une face dorsale (12) reposant sur la surface (13) de la paroi (10) de l'espace de logement (25) ;
- avec une face d'affichage (31) ou une face de commande (32) reposant sur la surface (13) de la paroi (10) de l'espace de logement (25) ; ou
- avec une face latérale (33 - 35) reposant sur la surface (13) de la paroi (10) de l'espace de logement (25).

5. Agencement selon l'une des revendications 1, 3 ou 4 précédentes, **caractérisé en ce que** l'agencement (1) comprend une deuxième structure d'antenne (7) qui traverse en particulier des parois adjacentes (10) du conteneur (11) et qui entoure en particulier l'espace de logement (25), étant entendu qu'avec la deuxième structure d'antenne (7), une énergie peut être transmise du véhicule automobile (F) au téléphone mobile (8), étant entendu que la transmission d'énergie s'effectue par induction dans le champ proche, étant entendu qu'un plan imaginaire (E7) défini par la deuxième structure d'antenne (7) s'étend parallèlement à la face dorsale (12) du téléphone mobile (8) se trouvant dans l'espace de logement (25).

6. Agencement selon l'une des revendications 1, 2, 3, 4 ou 5 précédentes, **caractérisé en ce que** l'antenne (26) du téléphone mobile (8) et le corps d'antenne plat (4) de la première structure d'antenne (2) se trouvent, par rapport à la longueur d'onde des ondes transmises :
- dans un champ proche, ou
- dans un champ proche et dans une zone limite entre un champ proche et un champ lointain, ou
- dans une zone limite entre un champ proche et un champ lointain, ou
- dans une zone limite entre un champ proche et un champ lointain et dans le champ lointain.

7. Agencement selon l'une des revendications 1, 2, 3, 4, 5 ou 6 précédentes, **caractérisé en ce que** la première structure d'antenne (2) comprend, outre le premier corps d'antenne plat en forme de tige (4), au moins un deuxième corps d'antenne (18), qui forme sur le premier corps d'antenne (4) une aile (19) qui s'étend parallèlement à la surface (13) de la paroi (10), étant entendu que les corps d'antenne (2, 4) comprennent une structure conductrice (20) qui traverse les corps d'antenne (2, 4), et étant entendu que le premier et le deuxième corps d'antenne (2, 4) forment un corps ayant une section en forme de L (37).

8. Agencement selon l'une des revendications 1 à 7 précédentes, **caractérisé en ce que** la première structure d'antenne (2) est réalisée symétriquement par rapport à tous les corps d'antenne (4, 18), étant entendu que la symétrie est considérée par rapport à une ligne de miroir (6) ou à un plan de miroir (SE) qui s'étend perpendiculairement sur la paroi (10) sur laquelle le téléphone mobile (8) repose et que la première structure d'antenne (2) coupe au milieu par rapport à sa longueur (L4) et à sa largeur (B4).

9. Agencement selon l'une des revendications 1 à 8 précédentes, **caractérisé en ce que** l'agencement (1) comprend une troisième structure d'antenne (28) destinée à la transmission sans fil de données et/ou de signaux audio, qui peut être utilisée selon une norme de communication à courte distance et qui est en particulier réalisée en tant que connexion Bluetooth et/ou connexion BluetoothLowEnergy et/ou connexion infrarouge.

10. Agencement selon l'une des revendications 1 à 9 précédentes, **caractérisé en ce que** la première structure d'antenne comprend au moins un corps d'antenne supplémentaire (18), qui est agencé dans un angle droit par rapport au premier corps d'antenne (4) et forme avec celui-ci une structure d'antenne tridimensionnelle (2a), étant entendu que le corps d'antenne supplémentaire (18) définit un plan (E18) qui s'étend parallèlement au fond (9) de l'espace de logement (25).
